# EUROPEAN PATENT SPECIFICATION

(11) **EP 3 815 548 B1**
(45) Date of publication and mention of the grant of the patent: **07.05.2025**
(21) Application number: 19825869.1
(22) Date of filing: 11.03.2019
(51) Int. Cl.: A23L 33/20, A23L 33/125, A23L 11/00, A23L 11/30, A23C 20/02

(54) **LOW-CALORIE SOYMILK WITH REDUCED SOYBEAN ODOR**
KALORIENARME SOJAMILCH MIT REDUZIERTEM SOJABOHNENGERUCH
LAIT DE SOJA À FAIBLE TENEUR EN CALORIES À ODEUR DE SOJA RÉDUITE

(30) Priority: 28.06.2018 KR 20180075043
(43) Date of publication of application: 05.05.2021
(73) Proprietor: Samyang Corporation, Seoul 03129 (KR)
(72) Inventor: LIM, Hye Jin, Suwon-si Gyeonggi-do 16506 (KR); KIM, Bong Chan, Seoul 01709 (KR); KIM, Yong-In, Yongin-si Gyeonggi-do 16868 (KR); SEO, Il, Gwangju-si, Gyeonggi-do 12784 (KR); LEE, Seung Mi, Hwaseong-si, Gyeonggi-do 18477 (KR); LIM, Su Youn, Seoul 08848 (KR); HAN, Tae-Chul, Hwaseong-si Gyeonggi-do 18496 (KR)
(74) Representative: Schön, Christoph
(86) International application number: PCT/KR2019/002808
(87) International publication number: WO 2020/004771

(56) References cited:
- EP-A1- 3 295 807
- WO-A1-2018/029351
- WO-A1-2018/080240
- WO-A1-2018/084537
- JP-A- 2014 007 966
- JP-A- 2015 023 803
- JP-A- 2015 043 767
- KR-A- 20160 035 833
- KR-A- 20160 089 551
- KR-A- 20180 047 842
- US-A1- 2016 302 463

## Description

### [TECHNICAL FIELD]

The present disclosure relates to a low-calorie and redued-saccharide soymilk including raw soybean extract solution, allulose, and soybean oil as defined in the appended claims. The soymilk according to the present disclosure includes allulose, and thus the soymilk has an excellent mouthfeel and taste even while having lower saccharide content and calories than general soymilk products containing sugar or fructose, and has excellent emulsion stability without adding a separate emulsifier.

### [BACKGROUND ART]

Soymilk is a typical processed soybean product which enhances soybean digestibility and protein utilization rate. The soymilk is well digested and absorbed, is rich in essential amino acids, contains a lot of essential fatty acids, is low in saturated fat, is free of cholesterol, and is rich in minerals such as iron, phosphorus and potassium, Therefore, the soymilk is effective in improving arteriosclerosis, lipid metabolism and nerve function, anti-aging, and breast cancer prevention by isoflavone, and can be supplied at a low price like milk, and thus, the demand therefor is increasing day by day. In particular, since soymilk does not contain lactose, it has been recognized for its value as a high-protein milk substitute food for infants who causes lactose intolerance and allergies due to milk, and is more and more recognized as a vegetable energy drink that is beneficial for preventing adult diseases.

The biggest drawback of soymilk products is off-flavor, such as green odor or beany flavor. Consequently, consumer preference is reduced, which is a cause of hindering sales expansion in the soymilk market. The cause of off-flavor is mainly induced by the oxidation of unsaturated fatty acids by lipoxygenase, and soybean varieties lacking this enzyme have been developed to inhibit the activity of lipoxygenase, or methods of enzyme inactivation by the introduction of various types of heat treatment steps have been studied, but have limitations. These off-taste and off-flavor caused the sweetness to enhance by the excessive addition of sugar to soymilk products.

In addition, conventional soymilk products have the problem of inducing digestive disorders and adversely affecting health by excessive mixing of a vegetable oil, an emulsifier that mixes this oil and water for improving the dilute viscosity of soybean extract solution, a thickener such as carrageenan for maintaining viscosity.

To compensate for the shortcomings of these soymilk products, various techniques, such as a process of using alkaline ionized water (Korean Unexamined Patent Publication No. 2006-35841), a process of adding and fermenting lactic acid bacteria (Korean Unexamined Patent Publication No. 2011-94601), and a process of vacuum deodorization (Korean Patent Registration No. 10-1308290), have been proposed. However, the technology capable of providing a soymilk which maintains the taste and nutrition of soymilk products, reduces sugar content and calories, and maintains emulsion stability in the absence of a separate emulsifier is still not sufficient.

JP 2015 043767 A discloses food and drink products having a protein content of 1.0 mass% or more and 10.0 mass% or less, and a rare sugar content of 0.02 mass% or more and 2.0 mass% or less, as well as a manufacturing method thereof.

JP 2015 023803 A discloses a method for masking unpleasant taste and unpleasant odor of food and drink that use food raw material having peculiar foreign smell and taste, such as panax ginseng, turmeric, collagen, cereal, egg, meat, vegetable, fish, or bean, wherein the food and drink contains 0.15 to 18 parts by weight of rare sugar containing at least D-psicose.

### [DETAILED DESCRIPTION OF THE INVENTION]

### [Technical Problem]

The present invention is to provide a low-calorie soymilk having excellent emulsion stability, including soybean extract solution, allulose, and soybean oil.

The soymilk of the present disclosure has lower saccharide content than a conventional soymilk, and contains allulose in an optimum mixing ratio, and thus has good emulsion stability, masks off-flavor peculiar to soybeans, and makes soymilk with high preference. In addition, the allulose-containing soymilk of the present disclosure provides a soymilk that does not use an emulsifier or reduces the added amount of emulsifier, or maintains emulsion stability.

### [Technical Solution]

Hereinafter, the present invention will be described in detail. Meanwhile, an embodiment disclosed below may be applied to the description and implementation of other embodimentts for the common parts, and the scope of the present invention is limited by the appended claims. According to the present invention, there is provided a low-calorie soymilk as defined in the appended claims.

The bean of the present disclosure is soybean. Further, the term "bean" as used herein may refer to including bean itself, crushed bean, heated bean, and crushed and heated bean.

According to some embodiments of the present disclosure, the soybean extract solution is contained in an amount of 50% by weight to 65% by weight, 55% by weight to 65% by weight, or 57% by weight to 62% by weight, based on 100% by weight of the total soymilk

The soybean oil refers to semi-drying oil obtained from soybeans. The soybean oil is preferably used in a refined form.

The soybean oil may be contained in an amount of 0.7% by weight to 2.0% by weight, 0.9% by weight to 2.0% by weight, 1.0% by weight to 2.0% by weight, 1.1% by weight to 2.0% by weight, 0.5% by weight to 1.8% by weight, 0.7% by weight to 1.8% by weight, 0.9% by weight to 1.8% by weight, 1.0% by weight to 1.8% by weight, 1.1% by weight to 1.8% by weight, 0.5% by weight to 1.6% by weight, 0.7% by weight to 1.6% by weight, 0.9% by weight to 1.6% by weight, 1.0% by weight to 1.6% by weight, 0.5% by weight to 1.4% by weight, 0.7% by weight to 1.4% by weight, 0.9% by weight to 1.4% by weight, 1.0% by weight to 1.4% by weight or 1.1% by weight to 1.4% by weight, based on 100% by weight of the total soymilk.

According to some embodiments of the present disclosure, allulose contained in the soymilk may be produced by a chemical synthesis or a biological method using an allulose epimerase, preferably, by a biological method, for example, a microbial or enzyme reaction. For example, the allulose is a mixed saccharide or obtained therefrom, and the mixed saccharide may be mixed saccharide prepared by reacting a composition for producing allulose comprising one or more selected from the group consisting of allulose epimerase, a microbial cell of a strain producing the epimerase, a culture of the strain, a lysate of the microbial cell, and an extract of the lysate or culture with a fructose-containing raw material, or obtained therefrom.

The allulose may be in a form of syrup or powder. The allulose syrup may be a solution prepared using allulose at a variety of concentrations, and the solid allulose in the allulose syrup may be contained in an amount of 10 to 100% by weight based on 100% by weight of the allulose syrup, and it may be prepared by mixing, preferably, 70 to 99% by weight, more preferably, 90 to 99.99% by weight. When using the allulose powder, the allulose powder solid may use the total composition powder, for example, allulose having a purity of 90% or more, for example the allulose powder containing 90 to 99.99% by weight, more preferably 95 to 99.99% by weight of allulose.

The allulose syrup may be obtained through separation, purification and concentration processes from the allulose only or mixed saccharide. In one example of the present disclosure, the allulose syrup that has undergone the separation and purification processes may be a liquid allulose syrup which has an electrical conductivity of 1 to 50 µS/cm, is colorless or light-yellow, and has sweetness.

As one example for preparation of allulose of the present disclosure, an expression system which can produce allulose epimerase with high expression rate and stability, a GRAS (Generally recognized as safe) microorganism using the same, and a method of producing allulose containing a microorganism and enzyme using the expression system, etc. are described in detail in Korean Patent Registration No. 10-1318422 and No. 10-1656063, and the like.

The allulose may be allulose alone or a mixed saccharide containing additional other saccharides, and the example of the mixed saccharide may contain 1 to 99.9% by weight of allulose based on 100% by weight of the solid content of the total mixed saccharide, and may further contain one or more selected from the group consisting of fructose and glucose. When the allulose mixed saccharide contains fructose and/or glucose, the mixed saccharide may contain 1 to 90% by weight of fructose and/or 1 to 50% by weight of glucose.

Specific examples of the allulose-containing mixed saccharide include 5 to 30 parts by weight of allulose, 20 to 50 parts by weight of fructose and 20 to 55 parts by weight of glucose, and 1 to 10 parts by weight of oligosaccharide based on 100 parts by weight of the total solid content of the mixed saccharide, and it may not contain oligosaccharide. The allulose, fructose and glucose all are preferably D-isomers.

The allulose contained in the soymilk of the present disclosure may be in a form of syrup or powder, preferably in the form of powder. When using the allulose powder, the allulose powder solid may use the total composition powder, for example, allulose having a purity of 90% or more, for example allulose powder containing 90 to 99.99% by weight, more preferably 95 to 99.99% by weight of allulose.

The content of allulose is 1.0% by weight to 20% by weight, 1.2 % by weight to 20 % by weight, 1.4 % by weight to 20 % by weight, 1.6 % by weight to 20% by weight, 1.8% by weight to 20% by weight, 2.0% by weight to 20% by weight, 2.2% by weight to 20% by weight, 2.4% by weight to 20% by weight, 1.0% by weight to 18% by weight, 1.2% by weight to 18% by weight, 1.4% by weight to 18% by weight, 1.6% by weight to 18% by weight, 1.8% by weight to 18% by weight, 2.0 % by weight to 18% by weight, 2.2% by weight to 18% by weight, 1.0% by weight to 16% by weight, 1.2% by weight to 16% by weight, 1.4% by weight to 16% by weight, 1.6% by weight to 16% by weight, 1.8% by weight to 16% by weight, 2.0 % by weight to 16% by weight, 2.2% by weight to 16% by weight, 1.2% by weight to 14% by weight, 1.4% by weight to 14% by weight, 1.6% by weight to 14% by weight, 1.8% by weight to 14% by weight, 2.0 % by weight to 14% by weight, 2.2% by weight to 14% by weight, 1.2% by weight to 12% by weight, 1.4% by weight to 12% by weight, 1.6% by weight to 12% by weight, 1.8% by weight to 12% by weight, 2.0 % by weight to 12% by weight, 2.2% by weight to 12% by weight, 3.0% by weight to 12% by weight, 4.0% by weight to 12% by weight, 4.0 % by weight to 11% by weight, or 4.2% by weight to 11% by weight, based on 100% by weight of the total soymilk

According to an embodiment of the present disclosure, the content of allulose may be 2.0 parts by weight to 40 parts by weight, 2.0 parts by weight to 38 parts by weight, 2.0 parts by weight to 36 parts by weight, 2.0 parts by weight to 34 parts by weight, 2.0 parts by weight to 32 parts by weight, 2.0 parts by weight to 30 parts by weight, 2.0 parts by weight to 28 parts by weight, 2.0 parts by weight to 26 parts by weight, 2.0 parts by weight to 24 parts by weight, 2.0 parts by weight to 22 parts by weight, 2.0 parts by weight to 20 parts by weight, 2.0 parts by weight to 18 parts by weight, 2.0 parts by weight to 17 parts by weight, 3.0 parts by weight to 40 parts by weight, 3.0 parts by weight to 38 parts by weight, 3.0 parts by weight to 36 parts by weight, 3.0 parts by weight to 34 parts by weight, 3.0 parts by weight to 32 parts by weight, 3.0 parts by weight to 30 parts by weight, 3.0 parts by weight to 28 parts by weight, 3.0 parts by weight to 26 parts by weight, 3.0 parts by weight to 24 parts by weight, 3.0 parts by weight to 22 parts by weight, 3.0 parts by weight to 20 parts by weight, 3.0 parts by weight to 18 parts by weight, 3.0 parts by weight to 17 parts by weight, 4.0 parts by weight to 40 parts by weight, 4.0 parts by weight to 38 parts by weight, 4.0 parts by weight to 36 parts by weight, 4.0 parts by weight to 34 parts by weight, 4.0 parts by weight to 32 parts by weight, 4.0 parts by weight to 30 parts by weight, 4.0 parts by weight to 28 parts by weight, 4.0 parts by weight to 26 parts by weight, 4.0 parts by weight to 24 parts by weight, 4.0 parts by weight to 22 parts by weight, 4.0 parts by weight to 20 parts by weight, 4.0 parts by weight to 18 parts by weight, 4.0 parts by weight to 17 parts by weight, 5.0 parts by weight to 17 parts by weight, 6.0 parts by weight to 17 parts by weight or 7.0 parts by weight to 17 parts by weight, based on 100 parts by weight of the soybean extract solution.

The low-calorie soymilk of the present invention including soybean extract solution, soybean oil and allulose as defined in the appended claims can maintain emulsion stability at a temperature of 1°C to 10°C, for up to 115 hours. The 0 hours may be the starting point of the emulsion stability experiment, and thus may exceed 0 hours.

The emulsion stability refers to a state in which two liquids that are not mixed with each other are dispersed in another liquid in the form of fine particles, and thus, the two liquids are not separated in an emulsified form and the mixed state is maintained. According to one embodiment of the present disclosure, the storage temperature may be 1°C to 10°C, 2°C to 8°C, 3°C to 7°C or 3°C to 6°C, for example 4°C.

Specifically, as a result of measuring the emulsion stability while storing the allulose-containing soymilk of the present disclosure at about 4°C for 5 days, no phase separation occurred for 120 hours (5 days) from the start of storage. In particular, the allulose-containing soymilk, which does not contain any emulsifier, maintained a similar degree of emulsion stability as compared with other soymilk containing an emulsifier even after storage for 120 hours (5 days). That is, the allulose-containing soymilk of the present disclosure can maintain the emuslion stability and reduce the amount of the emulsifier used even when the emulsifier is not separately contained.

The soymilk of the present disclosure may not contain an emulsifier, and may contain a small amount of an emulsifier.

According to one embodiment of the present disclosure, when an emulsifier is contained in the soymilk, the emulsifier may be contained in an amount of 0.01% to 0.3%, 0.01% to 0.2%, 0.01% to 0.1%, 0.05% to 0.3%, 0.05% to 0.2%, 0.05% to 0.1%, 0.07% to 0.3%, 0.07% to 0.2%, 0.07% ~ 0.1%, 0.08% to 0.3%, 0.08% to 0.2%, 0.08% to 0.1%, 0.09% to 0.3%, 0.09% to 0.2% or 0.09% to 0.1%, based on 100% by weight of the soymilk

Conventional soymilk products maintain the emulsion stability of soymilk by mixing an excessive amount of vegetable oil and an emulsifier that mixes this oil and water in order to improve the dilute viscosity of the soybean extract solution. However, the allulose-containing soymilk of the present disclosure maintains emulsion stability even if it contains no emulsifier or contains only a small amount of emulsifier. Therefore, the present disclosure newly revealed the emulsifying action of allulose in soymilk, can reduce the use of emulsifiers in soymilk and provide healthier and higher quality soymilk.

According to the present invention as defined in the appended claims, a low-calorie soymilk can be provided. The soymilk of the present disclosure has a calorie of 10 kcal to 60 kcal, 10 to 55 kcal, preferably 10 kcal to 50 kcal, more preferably 10 kcal to 45 kcal.

According to one specific embodiment of the present disclosure, the allulose-containing soymilk of the present disclosure has a sugar content of 10 to 20 brix, preferably 10 to 18 brix, more preferably 10 to 17 brixs.

According to one embodiment of the present disclosure, the present disclosure provides a soymilk as defined in the appended claims and a remaining amount of water, based on 100% by weight of the total soymilk.

Conventional soymilk products enhance the sweetness by adding excessive sugar in order to mask the off-taste and off-flavor peculiar to soybeans. As a result, even if off-taste and off-flavor are partially masked, there is a problem that calories are high. However, the soymilk of the present disclosure contains allulose instead of sugar, and contains soybean extract solution and soybean oil in an optimum ratio, whereby it masks the off-taste and off-flavor peculiar to soybeans, and at the same time, maintains an appropriate sugar content, has an excellent sweetness, has an excellent consumer sensory preference and is significantly lower in calories than commercial products.

The soymilk of the present disclosure contains allulose, and thereby, as a result of color difference analysis, a dark yellow soymilk having a high yellowness can be provided (see Experimental Example 3). As the allulose content in the soymilk of the present disclosure increases, the L value (lightness), the a value (redness) indicating redness (-) and green (+), and the b value (yellowness) indicating yellowness increase as a whole. The soymilk of the present disclosure has a color difference of ΔE (E*ab = [(ΔL*)² + (Δa*)² + (Δb*)²]^{1/2}) of 98 or more, preferably 98.3 or more, and more preferably, it has a value of 98.4 or more.

According to another embodiment of the present disclosure, the soymilk may further include gums, and the gums serve to increase the viscosity of the diluted soybean extract solution. The gums can be used without any particular limitation as long as they are gums commonly used in commercially available beverage foods, but preferably, it is appropriate to use xanthan gum or carrageenan or a mixture of both. More preferably, it is preferred to use carrageenan to prevent protein coagulation.

Further, in the present disclosure, flavoring agents, nutrients, vitamins, electrolytes, flavor organic acid or salt thereof, pH adjusting agents, stabilizers, and the like can be added alone or in combination, if necessary. At this time, the flavoring agents, nutrients, vitamins, electrolytes, flavor organic acid or salt thereof, pH adjusting agents, stabilizers, and the like may be appropriately selected and used by those skilled in the art.

One embodiment of the present disclosure provides a method for producing a low-calorie soymilk as defined in the appended claims, including the steps of: mixing soybean oil and purified water, adding and mixing soybean extract solution, and adding and mixing allulose.

In the step of mixing the soybean oil and the purified water, gums or/and an emulsifier may be further added, and the step is preferably performed by mixing them at 50°C to 90°C, preferably 60°C to 80°C, for example 70°C to 75°C, and homogenization (250, 50 bar).

The step of adding and mixing soybean extract solution, and the step of adding and mixing allulose are also preferably performed by mixing at 50°C to 90°C, preferably 60°C to 80°C, for example 70°C to 75°C.

Subsequently, it can go through a further sterilization process, and it is appropriate that the sterilization is performed at 90°C to 110°C, preferably 90°C to 100°C, more preferably 95°C to 100°C, for 10 to 20 minutes, preferably 15 to 20 minutes. The sterilization may go through an HTST sterilization process.

Therefore, even if the allulose-containing low-calorie soymilk of the present disclosure contains a lower amount of emulsifier than the conventional soymilk, the emulsion stability is maintained, for example, the emulsion stability is maintained 115 hours at a temperature of 1 °C to 10 °C for 115 hours

In addition, the soymilk of the present disclosure is a dark yellow, has excellent taste and flavor by masking the off-taste and off-flavor of beans, and has a low calorie, thereby satisfying the health need and preference of consumers.

### [ADVANTAGEOUS EFFECTS]

The low-calorie soymilk containing allulose of the present invention as defined in the appended claims has a low sugar content and calorie, and masks a fishy taste peculiar to soybeans by the optimum blending ratio of allulose and provides a soymilk with high preference. Also provided is a soymilk as defined in the appended claims that maintains emulsion stability while reducing the use of emulsifier.

### [BRIEF DESCRIPTION OF THE DRAWINGS]

FIG. 1 shows the results of the emulsion stability experiments performed on the soymilk prepared in Comparative Example 3 (#3-0) and Examples 3-1 (#3-1) to 3-5 (#3-5).
FIG. 2 shows an enlarged view of the degree of phase separation of each sample measured on the 5th day among the results of FIG. 1.
FIG. 3 is a graph showing the value of L measured in the color value analysis experiments of Comparative Example 6 (#Control), Comparative Example 3 (#3-0), and Examples 3-1 (#3-1) to 3-5 (#3-5).
FIG. 4 is a graph showing the value of a measured in the color value analysis experiments of Comparative Example 6 (#Control), Comparative Example 3 (#3-0), and Examples 3-1 (#3-1) to 3-5 (#3-5).
FIG. 5 is a graph showing the value of b measured in the color value analysis experiments of Comparative Example 6 (#Control), Comparative Example 3 (#3-0), and Examples 3-1 (#3-1) to 3-5 (#3-5).

### [DETAILED DESCRIPTION OF THE EMBODIMENTS]

Hereinafter, the present disclosure will be described in more detail with reference to examples and experimental examples, but these examples and experimental examples are for illustrative purposes only, and the scope of the present disclosure is not limited thereby but is defined by the appended claims.

### Preparation Example 1: Soymilk component and composition of soybean extract solution

(1) Raw material components of soymilk
The following shows the basic mixing ratio of soymilk. The used allulose powder was a product having an allulose content of 98% or more based on solid content.

**[Table 1]**

| Raw material | Component | Mixing ratio % | Remark |
|---|---|---|---|
| soybean extract solution | Soybean solid | 66.00 | |
| | content10% | | |
| White sugar | Refined sugar | 4.80 | Samyang Corporation |
| Allulose powder | Allulose content(98% or more based on the solid content) | - | Samyang Corporation |
| Carrageenan | gums | 0.02 | |
| Soybean oil | - | 1.20 | |
| refined salt | - | 0.14 | - |
| Almax2700 | Emulsifier | 0.07 | LSHINWELLS Co. Ltd. |
| P-1670 | Emulsifier | 0.03 | LSHINWELLS Co. Ltd. |
| Distilled water | | 27.74 | |
| Sum | | 100.00 | |

**[Table 2]**

| Test Group | #1 | #2 | #3 | #4 | #5 |
|---|---|---|---|---|---|
| Added amount of soybean extract solution (%) | 30 | 50 | 60 | 75 | 90 |
| Soybean solid content of ssoybean extract solution(%) | 3 | 5 | 6 | 7.5 | 9 |
| Protein content of soybean extract solution (%) | 1.422 | 2.37 | 2.844 | 3.555 | 4.266 |

(2) Setting the range of % allulose content according to the added amount of allulose powder
Table 3 below shows the actual addition amount of allulose according to the addition amount of allulose powder (solid content 98%).

**[Table 3]**

| Item | #1-1 | #1-2 | #1-3 | #1-4 |
|---|---|---|---|---|
| Added amount of allulose powder (%) | 2.5 | 4.5 | 7.0 | 10.0 |
| Added amount of allulose (%) | 2.45 | 4.41 | 6.86 | 9.80 |

### Example 1 and Comparative Example 1: Preparation of soymilk containing 30% of soybean extract solution

As shown in Table 4, the soymilk of Comparative Example 1 containing sugar and 30% of soybean extract solution, and the soymilk of Examples 1-1 to 1-4 (which do not fall within the scope of the present invention) containing 30% of soybean extract solution and containing allulose powder instead of sugar were prepared.

Specifically, soybean oil, gums, emulsifier and purified water were added to and homogenized with sufficiently stirring at 70°C (250, 50 bar). Next, the soybean extract solution was added to the homogenixed mixed solution and stirred, and then sugar was added, stirred and mixed at 70°C. Then, after being passed through HTST sterilization at 95°C for 15 minutes, it was filled in Aseptic PET.

**[Table 4]**

| Raw material | Comparative Example 1 | Example 1-1^{(x)} | Example 1-2^{(x)} | Example 1-3^{(x)} | Example 1-4^{(x)} |
|---|---|---|---|---|---|
| soybean extract solution(T/S 10%) | 30.000 | 30.000 | 30.000 | 30.000 | 30.000 |
| White sugar (refined sugar) | 4.500 | - | - | - | - |
| Allulose powder (98% or more based on the solid content) | - | 2.500 | 4.500 | 7.000 | 10.000 |
| Carrageenan 11838 (gums) | 0.020 | 0.020 | 0.020 | 0.020 | 0.020 |
| Soybean oil | 1.200 | 1.200 | 1.200 | 1.200 | 1.200 |
| refined salt | 0.140 | 0.140 | 0.140 | 0.140 | 0.140 |
| Almax2700(Emulsifier) | 0.070 | 0.070 | 0.070 | 0.070 | 0.070 |
| P-1670(Emulsifier) | 0.030 | 0.030 | 0.030 | 0.030 | 0.030 |
| Distilled water | 64.040 | 66.040 | 64.040 | 61.540 | 58.540 |
| Sum | 100.000 | 100.000 | 100.000 | 100.000 | 100.000 |

| | | | | | |
|---|---|---|---|---|---|
| ^{(x)} Examples 1-1, 1-2, 1-3 and 1-4 do not fall within the scope of the present invention | | | | | |

### Example 2 and Comparative Example 2: Preparation of soymilk containing 50% of soybean extract solution

As shown in Table 5 below, the soymilk of Comparative Example 2 containing 50% of soybean extract solution and containing sugar, and the soymilk of Examples 2-1 to 2-4 containing 50% of soybean extract solution and containing allulose powder instead of sugar were prepared. The preparation method is the same as in Example 1.

**[Table 5]**

| Raw material | Comparative Example 2 | Example 2-1 | Example 2-2 | Example 2-3 | Example 2-4 |
|---|---|---|---|---|---|
| soybean extract solution | 50.000 | 50.000 | 50.000 | 50.000 | 50.000 |
| White sugar | 4.500 | - | - | - | - |
| Allulose powder | - | 2.500 | 4.500 | 7.000 | 10.000 |
| Carrageenan 11838 | 0.020 | 0.020 | 0.020 | 0.020 | 0.020 |
| Soybean oil | 1.200 | 1.200 | 1.200 | 1.200 | 1.200 |
| refined salt | 0.140 | 0.140 | 0.140 | 0.140 | 0.140 |
| Almax2700 | 0.070 | 0.070 | 0.070 | 0.070 | 0.070 |
| P-1670 | 0.030 | 0.030 | 0.030 | 0.030 | 0.030 |
| Distilled water | 44.040 | 46.040 | 44.040 | 41.540 | 38.540 |
| Sum | 100. | 100 | 100 | 100 | 100 |

### Example 3 and Comparative Example 3: Preparation of soymilk containing 60% of soybean extract solution

As shown in Table 6 below, the soymilk of Comparative Example 3 containing 60% of soybean extract solution and containing sugar, and the soymilk of Examples 3-1 to 3-5 containing 60% of soybean extract solution and containing allulose powder instead of sugar were prepared. The preparation method is the same as in Example 1. Examples 3-5 did not contain emulsifier (Almax2700, P-1670). The preparation method is the same as in Example 1.

**[Table 6]**

| Raw material | Comparative Example 3 | Example 3-1 | Example 3-2 | Example 3-3 | Example 3-4 | Example 3-5 |
|---|---|---|---|---|---|---|
| soybean extract solution | 60.0 | 60.0 | 60.0 | 60.0 | 60.0 | 60.0 |
| White sugar | 4.50 | - | - | - | - | - |
| Allulose powder | - | 2.5 | 4.5 | 7.0 | 10.0 | 7.0 |
| Carrageenan 11838 | 0.020 | 0.020 | 0.020 | 0.020 | 0.020 | 0.020 |
| Soybean oil | 1.200 | 1.200 | 1.200 | 1.200 | 1.200 | 1.200 |
| refined salt | 0.140 | 0.140 | 0.140 | 0.140 | 0.140 | 0.140 |
| Almax2700 | 0.070 | 0.070 | 0.070 | 0.070 | 0.070 | - |
| P-1670 | 0.030 | 0.030 | 0.030 | 0.030 | 0.030 | - |
| Distilled water | 34.040 | 36.040 | 34.040 | 31.540 | 28.540 | 31.640 |
| Sum | 100 | 100 | 100 | 100 | 100 | 100 |

### Example 4 and Comparative Example 4: Preparation of soymilk containing 75% of soybean extract solution

The soymilk of Comparative Example 4 containing 75% of soybean extract solution and containing sugar, and the soymilk of Examples 4-1 to 4-4 (which do not fall within the scope of the present invention) containing 75% of soybean extract solution and containing allulose powder instead of sugar were prepared.

**[Table 7]**

| Raw material | Comparative Example 4 | Example 4-1^{(x)} | Example 4-2^{(x)} | Example 4-3^{(x)} | Example 4-4^{(x)} |
|---|---|---|---|---|---|
| soybean extract solution | 75.000 | 75.000 | 75.000 | 75.000 | 75.000 |
| White sugar | 4.500 | - | - | - | - |
| Allulose powder | - | 2.500 | 4.500 | 7.000 | 10.000 |
| Carrageenan 11838 | 0.020 | 0.020 | 0.020 | 0.020 | 0.020 |
| Soybean oil | 1.200 | 1.200 | 1.200 | 1.200 | 1.200 |
| refined salt | 0.140 | 0.140 | 0.140 | 0.140 | 0.140 |
| Almax2700 | 0.070 | 0.070 | 0.070 | 0.070 | 0.070 |
| P-1670 | 0.030 | 0.030 | 0.030 | 0.030 | 0.030 |
| Distilled water | 19.040 | 21.040 | 19.040 | 16.540 | 13.540 |
| Sum | 100.000 | 100.000 | 100.000 | 100.000 | 100.000 |

| | | | | | |
|---|---|---|---|---|---|
| ^{(x)} Examples 4-1, 4-2, 4-3 and 4-4 do not fall within the scope of the present invention | | | | | |

### Experimental Example 1: Measurement of PH and brix of soymilk

The pH and sugar content of the soymilk of Comparative Example 5 (Vegemeal, Chungs Food) as commercially available soymilk products, and Comparative Example 3, and Examples 3-1 to 3-5, were measured. Specifically, the pH was measured using a pH meter (Methrom 780 pH meter, Switzerland), and the sugar content was measured using an Atago table brixmeter (20°C sample analysis).

**[Table 8]**

| Item | Comparative Example 6 | Comparative Example 3 | Example 3-1 | Example 3-2 | Example 3-3 | Example 3-4 | Example 3-5 |
|---|---|---|---|---|---|---|---|
| pH | 7.28 | 6.52 | 6.54 | 6.55 | 6.55 | 6.56 | 6.57 |
| bx | 13.92 | 12.82 | 11.05 | 12.58 | 14.84 | 17.1 | 15.81 |

As a result, it was confirmed that the pH of the commercially available soymilk was at a neutral level of 6.0 to 8.0, and the soymilk according to Examples 3-1 to 3-5 of the present invention also had a similar pH.

### Experimental Example 2: Emulsion stability experiment of soymilk

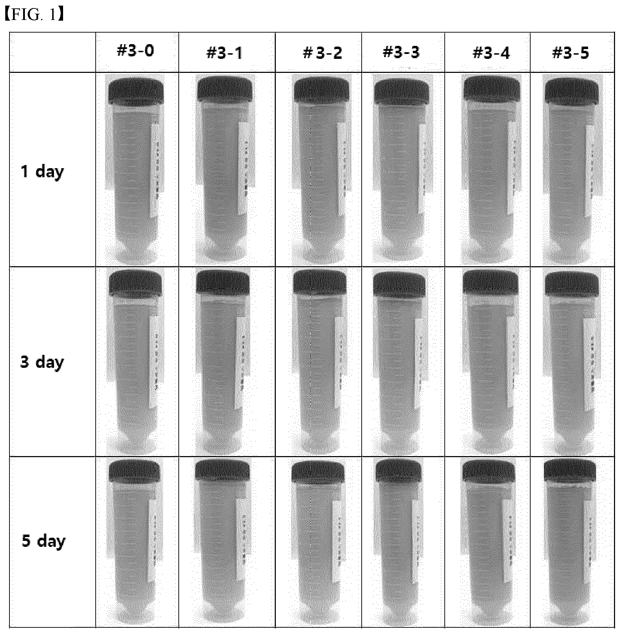

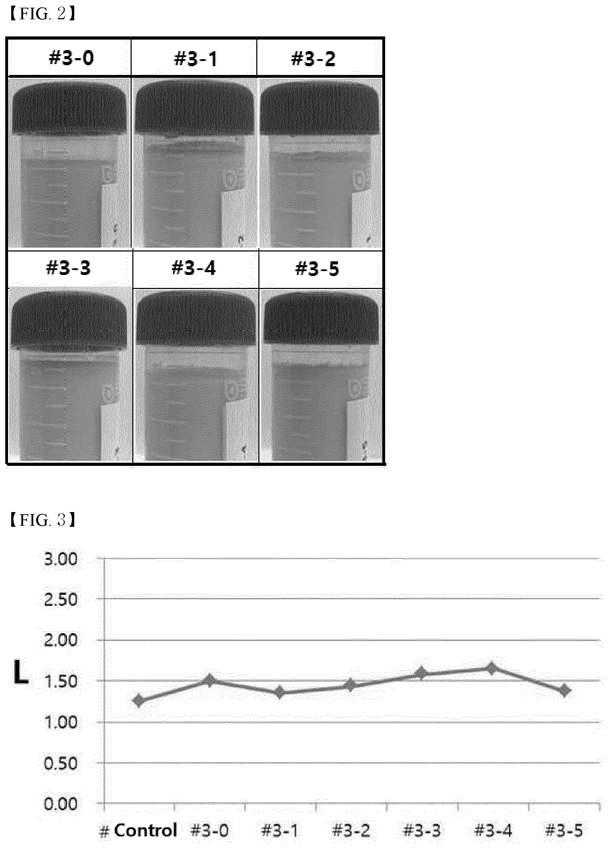

The soymilk prepared in Comparative Example 3 and Examples 3-1 to 3-5 was refrigerated and stored at 4°C for 5 days, and then the degree of phase separation was visually compared. The results are shown in FIGS. 1 and 2.

As shown in FIGS. 1 and 2, on the fifth day of storage, only the soymilk prepared in Example 3-1 showed slight phase separation in the upper part, but the soymilk according to Examples 3-2 to 3-5 did not undergo phase separation for 5 days from the start of storage.

In addition, the soymilk containing allulose of Example 3-5 of the present disclosure does not contain an emulsifier. Even after 5 days after storage in the same manner as allulose soymilk containing the emulsifier (Example 3-3) and the soymilk according to Comparative Example 3 containing the emulsifier and sugar, phase separation did not occur, and had a similar degree of emulsion stability.

### Experimental Example 3: Color value analysis experiment of soymilk

In order to confirm the change in color of soymilk according to the content of allulose, a color value analysis experiment was performed.

The chromaticity of the soymilk sample of Comparative Example 6 (Vegemeal, Chungs Food) as commercially available soymilk products, Comparative Example 3, and Examples 3-1 to 3-5, was measured using a color difference meter (CM-3500d, Konica Minolta, Osaka, Japan), and the ΔE associated therewith was calculated.

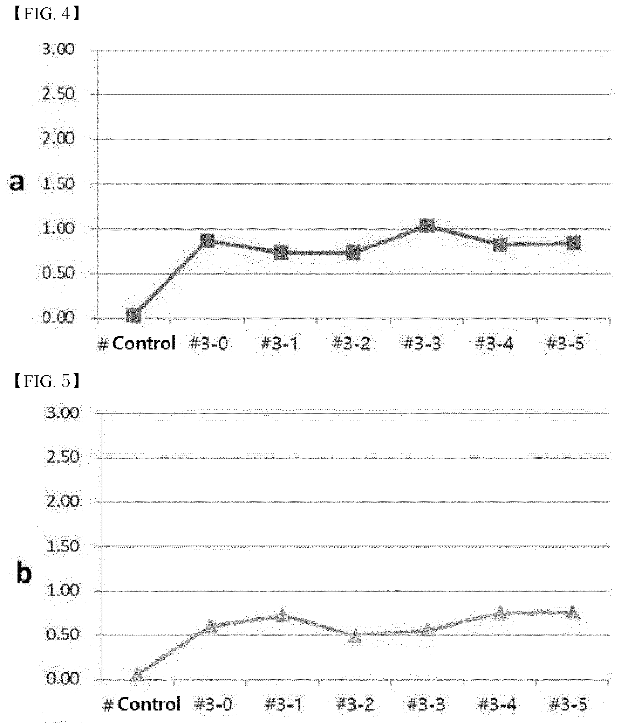

Specifically, when analyzing chromaticity, the L value indicating brightness, the a value (Redness) indicating redness (-) and greenness (+), the b value (Yellowness) indicating the degree of yellowness, and the color difference ΔE (ΔE*ab = [(ΔL*)² + (Δa*)² + (Δb*)²]^{1/2}) were measured in the first, second, and third order, and the average was measured. The results are shown in Table 9 below. The change of the L value is shown in Fig. 3, the change of the a value is shown in FIG. 4, and the change of the b value is shown in FIG. 5.

According to FIGS. 3 to 5, the L, a, and b values appeared to increase overall as the allulose content increased, confirming that this was due to the browning effect of allulose. As a result of chromaticity comparison, it was found that the higher the content of allulose in the soymilk, the higher the yellowness, so that the deeper color could be imparted to soymilk. In particular, the soymilk of Example 3-5 exhibited a yellowness similar to that of the soymilk of Comparative Example 6.

**[Table 9]**

| Item | | L | a | b | ΔE |
|---|---|---|---|---|---|
| Comparative Example 6 | 1st measurement | 1.23 | 0.05 | 0.07 | 98.75 |
| | 2nd measurement | 1.27 | -0.01 | 0.06 | 98.71 |
| | 3rd measurement | 1.24 | 0.06 | 0.06 | 99.09 |
| | Mean | 1.25 | 0.03 | 0.06 | 98.85 |
| Comparative Example3 | 1st measurement | 1.55 | 0.81 | 0.60 | 98.44 |
| | 2nd measurement | 1.38 | 0.89 | 0.73 | 98.61 |
| | 3rd measurement | 1.55 | 0.90 | 0.48 | 98.45 |
| | Mean | 1.49 | 0.87 | 0.60 | 98.50 |
| Example3-1 | 1st measurement | 1.38 | 0.76 | 0.57 | 98.62 |
| | 2nd measurement | 1.40 | 0.54 | 0.78 | 98.60 |
| | 3rd measurement | 1.26 | 0.89 | 0.81 | 98.74 |
| | Mean | 1.35 | 0.73 | 0.72 | 98.65 |
| Example3-2 | 1st measurement | 1.46 | 0.69 | 0.49 | 98.53 |
| | 2nd measurement | 1.25 | 0.83 | 0.56 | 98.74 |
| | 3rd measurement | 1.59 | 0.67 | 0.44 | 98.40 |
| | Mean | 1.43 | 0.73 | 0.50 | 98.56 |
| Example3-3 | 1st measurement | 1.64 | 0.89 | 0.53 | 98.35 |
| | 2nd measurement | 1.74 | 0.93 | 0.52 | 98.25 |
| | 3rd measurement | 1.36 | 1.28 | 0.62 | 98.63 |
| | Mean | 1.58 | 1.03 | 0.56 | 98.41 |
| Example3-4 | 1st measurement | 1.66 | 0.79 | 0.78 | 98.33 |
| | 2nd measurement | 1.77 | 0.81 | 0.55 | 98.22 |
| | 3rd measurement | 1.53 | 0.88 | 0.93 | 98.47 |
| | Mean | 1.65 | 0.83 | 0.75 | 98.34 |
| Example3-5 | 1st measurement | 1.28 | 0.84 | 0.71 | 98.71 |
| | 2nd measurement | 1.38 | 0.81 | 0.81 | 98.73 |
| | 3rd measurement | 1.46 | 0.87 | 0.78 | 99.24 |
| | Mean | 1.37 | 0.84 | 0.77 | 98.89 |

### Experimental Example 4: Sensory evaluation

Sensory evaluation of the soymilk prepared in Comparative Example 3 and Examples 3-1 to 3-5 was performed. The evaluation items of color satisfaction, mouth feel (thin-thick), texture satisfaction, taste satisfaction, and overall satisfaction were evaluated based on the following evaluation criteria. The evaluation results are shown in Table 10 below. Specifically, sensory evaluation was performed on 20 adult male and female panelists in their 20s and 50s using a 5-point scale.

### [Evaluation criteria]

Color satisfaction: light color (1 point)-dark color (5 points)
mouthfeel: No and light mouth feel (1 point)-high and heavy mouth feel (5 points)
Texture satisfaction: Very bad texture (1 point)-very good texture (5 points)
Taste satisfaction: Very bad taste (1 point)- Very good taste (5 points)
Overall satisfaction: Very bad overall satisfaction (1 point)- Very good overall satisfaction (5 points)

Specifically, the color satisfaction refers to the degree of darkness and lightness
of color when the sample soymilk is observed with the naked eye, the mouth feel means the degree to which mouth feel of sample is heavy, the texture satisfaction means the degree of texture satisfaction that can be felt in the mouth, the taste satisfaction means the degree of taste satisfaction of taste that can be felt in the mouth, and the overall satisfaction means the degree of overall sensory satisfaction of the product.

**[Table 10]**

| soybean extract solution% | Color satisfaction | Mouthfeel | Texture satisfaction | Taste satisfaction | Overall satisfaction |
|---|---|---|---|---|---|
| Comparative Example 3 | 3.2 | 2 | 3 | 3 | 2.8 |
| Example3-1 | 3.3 | 2.1 | 3.2 | 3.2 | 3 |
| Example3-2 | 3.2 | 2.8 | 3.1 | 3.4 | 3 |
| Example3-3 | 3.6 | 3.2 | 3.1 | 3.6 | 3 |
| Example3-4 | 3.5 | 3.9 | 3.3 | 3.7 | 3.4 |
| Example3-5 | 3.4 | 3.8 | 3.2 | 3.7 | 3.3 |

As shown in Table 10, the overall satisfaction of the soymilk according to Examples 3-1 to 3-5 containing allulose was higher than that of the soymilk according to Comparative Example 3 containing sugar. Specifically, the soymilk of Examples 3-1 to 3-5 was more excellent in color satisfaction, mouth feel, texture satisfaction, and taste satisfaction than Comparative Example 1

### Experimental Example 5: Comparison of sugar reducing effect

In order to confirm the sugar reducing effect of the present disclosure soymilk, the calories of the soymilks according to Comparative Example 3, Example 3-1 to Example 3-5 were measured and shown in Table 11 below.

**[Table 11]**

| Item | Comparative Example 3 | Example 3-1 | Example 3-2 | Example 3-3 | Example 3-4 | Example 3-5 |
|---|---|---|---|---|---|---|
| Caloric (kcal/100ml) | 61.64 | 43.64 | 43.64 | 43.64 | 43.64 | 43.24 |

As shown in Table 11, it was confirmed that the calories of the soymilk according to Examples 3-1 to 3-5 containing allulose were significantly lower than the soymilk of Comparative Example 3 containing sugar.

## Claims

1. A low-calorie soymilk comprising soybean extract solution, allulose and soybean oil, and maintaining emulsion stability at a temperature of 1°C to 10°C for up to 115 hours,
wherein the soymilk has a calorie of 10 kcal to 60 kcal based on 100 ml of the soymilk,
wherein the soymilk comprises the soybean extract solution in an amount of 45% by weight to 65% by weight, wherein the soybean extract solution has a soybean solid content of 10% by weight of the soybean extract solution, the soybean oil in an amount of 0.50% by weight to 2.0% by weight, and the allulose in an amount of 1.0 to 20.0% by weight, based on 100% by weight of the total soymilk,
wherein the soybean extract solution is prepared by adding water to soybean and pulverizing it, or obtained by separating a pureed soybean from bean and the fresh soymilk does not contain any additives other than a soybean, and
wherein the soybean oil is semi-drying oil obtained from soybeans.

2. The soymilk according to claim 1, wherein the allulose is contained in an amount of 2.0 parts by weight to 40 parts by weight based on 100 parts by weight of the soybean extract solution.

3. The soymilk according to claim 1, wherein the soymilk further comprises an emulsifier.

4. The soymilk according to claim 3, wherein a content of the emulsifier is 0.01% by weight to 0.3% by weight based on 100% by weight of the soymilk.

5. A method for producing a soymilk according to claim 1, comprising the steps of mixing soybean oil and purified water, mixing with adding soybean extract solution, and mixing with adding allulose.

6. The method for producing a soymilk according to claim 5, wherein the method for producing is performed at 50°C to 90°C.

## Patentansprüche

1. Kalorienarme Sojamilch, die Sojabohnenextraktlösung, Allulose und Sojabohnenöl umfasst und die Emulsionsstabilität bei einer Temperatur von 1°C bis 10°C für bis zu 115 Stunden aufrechterhält,
wobei die Sojamilch eine Kalorienzahl von 10 kcal bis 60 kcal, bezogen auf 100 ml Sojamilch, aufweist,
wobei die Sojamilch die Sojabohnenextraktlösung in einer Menge von 45 Gew.-% bis 65 Gew.-% umfasst, wobei die Sojabohnenextraktlösung einen Sojabohnen-Feststoffgehalt von 10 Gew.-% der Sojabohnenextraktlösung, das Sojabohnenöl in einer Menge von 0,50 Gew.-% bis 2,0 Gew.-% und die Allulose in einer Menge von 1,0 bis 20,0 Gew.-%, bezogen auf 100 Gew.-% der gesamten Sojamilch, aufweist,
wobei die Sojabohnenextraktlösung durch Zugabe von Wasser zu Sojabohnen und einer Pulverisierung davon hergestellt wird oder durch Abtrennung von pürierten Sojabohnen von den Bohnen erhalten wird und die frische Sojamilch keine anderen Zusatzstoffe als Sojabohnen enthält, und
wobei das Sojabohnenöl ein teiltrocknendes Öl ist, das aus Sojabohnen gewonnen wird.

2. Sojamilch gemäß Anspruch 1, wobei die Allulose in einer Menge von 2,0 Gewichtsteilen bis 40 Gewichtsteilen, bezogen auf 100 Gewichtsteile der Sojabohnenextraktlösung, enthalten ist.

3. Sojamilch gemäß Anspruch 1, wobei die Sojamilch des Weiteren einen Emulgator umfasst.

4. Sojamilch gemäß Anspruch 3, wobei der Gehalt des Emulgators 0,01 Gew.-% bis 0,3 Gew.-%, bezogen auf 100 Gew.-% der Sojamilch, beträgt.

5. Verfahren zur Herstellung einer Sojamilch gemäß Anspruch 1, das die Schritte des Mischens von Sojabohnenöl und gereinigtem Wasser, des Mischens unter Zugabe von Sojabohnenextraktlösung und des Mischens unter Zugabe von Allulose umfasst.

6. Verfahren zur Herstellung einer Sojamilch gemäß Anspruch 5, wobei das Verfahren zur Herstellung bei 50°C bis 90°C durchgeführt wird.

## Revendications

1. Lait de soja hypocalorique comprenant une solution d'extrait de soja, de l'allulose et de l'huile de soja, et conservant la stabilité d'émulsion à une température de 1 °C à 10 °C jusqu'à 115 heures,
dans lequel le lait de soja a une valeur calorique de 10 kcal à 60 kcal sur la base de 100 ml de lait de soja,
dans lequel le lait de soja comprend la solution d'extrait de soja en une quantité de 45 % en poids à 65 % en poids, la solution d'extrait de soja ayant en une teneur en matières solides de soja de 10 % en poids de la solution d'extrait de soja, l'huile de soja en une quantité de 0,50 % en poids à 2,0 % en poids, et l'allulose en une quantité de 1,0 à 20,0 % en poids, sur la base de 100 % en poids du lait de soja total,
dans lequel la solution d'extrait de soja est préparée en ajoutant de l'eau au soja et en la pulvérisant, ou obtenue par séparation d'un purée de soja des graines et le lait de soja frais ne contient pas d'additifs autres que le soja, et
dans lequel l'huile de soja est une huile semi-siccative obtenue à partir de soja.

2. Lait de soja selon la revendication 1, dans lequel l'allulose est contenu en une quantité de 2,0 parties en poids à 40 parties en poids sur la base de 100 parties en poids de la solution d'extrait de soja.

3. Lait de soja selon la revendication 1, dans lequel le lait de soja comprend en outre un émulsifiant.

4. Lait de soja selon la revendication 3, dans lequel une teneur en émulsifiant est de 0,01 % en poids à 0,3 % en poids sur la base de 100 % en poids du lait de soja.

5. Procédé de production d'un lait de soja selon la revendication 1, comprenant les étapes consistant à mélanger de l'huile de soja et de l'eau purifiée, mélanger avec ajout de solution d'extrait de soja, et mélanger avec ajout d'allulose.

6. Procédé de production d'un lait de soja selon la revendication 5, dans lequel le procédé de production est réalisé à 50 °C à 90 °C.
